# EUROPEAN PATENT SPECIFICATION

(11) **EP 1 672 090 B1**
(45) Date of publication and mention of the grant of the patent: **14.05.2008**
(21) Application number: 05257868.9
(22) Date of filing: 20.12.2005
(51) Int. Cl.: C23C 14/04

(54) **Method for recycling coating maskant**
Methode zum Recycling von Schutzschichten bei der Oberflächenbehandlung
Méthode de recyclage d'un revêtement protecteur

(30) Priority: 20.12.2004 US 17321
(43) Date of publication of application: 21.06.2006
(73) Proprietor: United Technologies Corporation, Hartford, CT 06101 (US)
(72) Inventor: Hua, Sim Mong, Singapore 670155 (IN); Kheng,Marvin Foo Yet, Bandra Baru Permas Jaya ,81750 Masai (MY); Balajirao, Garimella, Singapore 669618 (IN); Balakrishnan, Ranjan A/L, Johor Bahru,Johor 81300 Skudai (MY)
(74) Representative: Booth, Catherine Louise

(56) References cited:
- US-A- 5 695 659

## Description

This invention relates to the use of maskants in coating processes in general, and to methods for recycling used maskants in particular.

The application of a coating to a portion of a rotor blade within a gas turbine engine is a common manufacturing and repair process. The repairs often require that a maskant be applied to one or more portions of the rotor blade to prevent attachment of the coating materials to those portions of the rotor blade. Once the coating is bonded to the substrate, the maskant is removed. Historically, maskants have been applied once and disposed of after the single use. A person of skill in the art will recognize that maskants are relatively expensive material. Used maskant must also be disposed of properly, consequently creating additional work and cost. US 5,695,659 discloses the use of an ultraviolet light curable maskant on an airfoil.

What is needed is a method for recycling used maskant that enables the maskant to be used more than once.

In accordance with the present invention, there is provided a method for recycling maskant as claimed in claim In its preferred embodiments at least, the method includes the steps of: 1) collecting used maskant agglomerations, each agglomeration having a volumetric size; 2) straining the used maskant agglomerations with a sieve or other straining device; and 3) blending the maskant agglomerations, wherein the blending is operable to reduce the volumetric size of the maskant agglomerations. In some embodiments, the present method includes a plurality of blending and straining steps.

The present method enables maskant to be used more than once. The ability to use the maskant more than once significantly decreases the cost of coating a substrate where a maskant is used. The ability to use the maskant multiple times also significantly reduces the amount of waste materials produced in the coating process. A person of skill in the art will recognize the substantial cost and environmental benefits produced by reduced the amount of waste material generated.

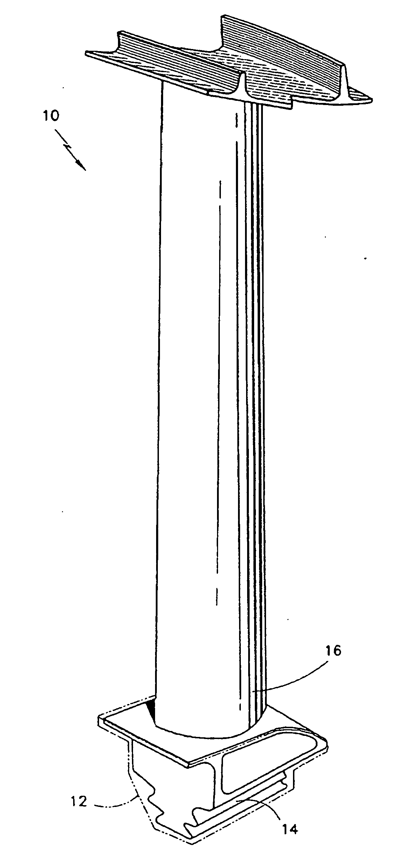

Figure 1 shows a rotor blade typically used within a gas turbine engine, diagrammatically illustrating maskant applied to the root portion of the airfoil.

The present method of recycling maskant can be used with any coating process where a maskant is used to prevent the bonding of coating materials to a predetermined portion of a substrate, and where the maskant is not made permanently inoperable as a result of the coating process.

Embodiments of the present invention and arrangements suitable for use with the present invention will now be described with reference to the figure. Using the rotor blade 10 shown in the Figure as an example of a substrate, the maskant 12 (shown in phantom) is applied to the root portion 14 of the rotor blade 10 and coating material is applied to the airfoil portion 16 of the rotor blade 10. The rotor blade 10 is subjected to the coating process; e.g., diffusion, etc. After the coating process is completed, excess coating material is preferably removed from the blade 10. The maskant 12 is subsequently removed from the root portion 14 for example by tapping the blade 10 over a collection container. At this point, the used maskant is typically in a variety of different size agglomerations (i.e., "lumps"). In some embodiments, the maskant lumps are transferred to a blending apparatus and blended for a predetermined period of time. The blending operation will cause the maskant lumps to decrease in average volumetric size, and thereby become more volumetrically uniform in size.

In some embodiments, after the blending step, the blended maskant is transferred to a sieve, or other straining device, of a predetermined size; i.e., a sieve having a plurality of apertures of a first cross-sectional area, or screen mesh of a particular size. The sieve size will depend on the maskant used, and the process at hand. The blended maskant is then strained within the sieve to remove materials of a size small enough to pass through the sieve. Those materials may include contaminants, coating material, and maskant material fines. This arrangement is not in accordance with preferred embodiments of the present invention unless the blending step is preceded by a first straining step, or unless the blending then the straining steps are followed by at least a further blending and preferably a further straining step as described below and as claimed in the claims.

Depending upon the maskant material and the coating process, the blended and sieved maskant may be in form acceptable to be reused as maskant. If so, the maskant can then be appropriately stored to be used later according to the normal maskant procedures although this is not in accordance with the present invention as discussed above, unless an additional straining step is provided prior to the blending step.

In accordance with preferred embodiments of the present invention, the blended and sieved maskant is subjected to one or more additional blending steps and straining steps. For example, if a second blending step is desirable, the once blended and strained maskant is transferred to a blending apparatus and blended for second time for a predetermined period of time. Here again, the blending operation will cause the maskant lumps to decrease in average volumetric size, and thereby become more volumetrically uniform in size.

After the second blending step, the blended maskant is transferred to a second sieve of a predetermined size; i.e., a sieve having a plurality of apertures of a second cross-sectional area. Preferably the second sieve is finer in size than the first sieve; i.e., the apertures (or screen mesh size) of the second sieve are smaller in cross-sectional area than those of the first sieve. The now twice blended maskant is then strained within the sieve to remove materials of a size small enough to pass through the second sieve.

In accordance with preferred embodiments of the present invention and depending upon the maskant material and the coating process, the now twice blended and sieved maskant may be in form acceptable to be reused as maskant. If so, the maskant can then be appropriately stored to be used later according to the normal maskant procedures. If not, the blending and sieving steps can be repeated.

The following example is provided to illustrate a method that may be used in conjunction with preferred embodiments of the present invention. The present method is not, however, limited to the materials disclosed within the example.

Maskant, for example M8 brand maskant commercially available from APV Engineered Coatings, 1390 Firestone Parkway, Akron, OH 44301, is applied to the root portion 14 of the rotor blade 10. Coating material, such as an aluminide, is applied to the airfoil portion 16 of the rotor blade 10. The rotor blade 10 is subjected to a coating process wherein the aluminide diffuses into the airfoil substrate. After the coating process is completed, excess coating material is removed from the entire rotor blade 10 by brushing the blade. The maskant is subsequently removed from the blade 10 by tapping the blade over a collection container. The maskant lumps removed from the blade 10 are transferred to a blending apparatus and blended for a predetermined period of time.

After the blending step, the blended maskant is transferred to a four (4) millimeter sieve. The blended maskant is then strained within the sieve to remove materials of a size small enough to pass through the sieve. The material that passes through the sieve is discarded.

The blended and sieved maskant is transferred to a blending apparatus and blended a second time for a predetermined period of time. After the second blending step, the blended maskant is transferred to a 0.100 millimeter sieve and strained to remove materials of a size small enough to pass through the second sieve. The now twice blended and sieved maskant is subsequently removed from the sieve and is stored for later use. This is in accordance with preferred embodiments of the present invention in which the collected masked agglomerations are blended prior to straining the collected maskant agglomerations. In other embodiments of the present invention, the collected masked agglomerations are strained prior to blending the collected maskant agglomerations and one or more further blending and/or straining steps may also be carried out, and in a preferred embodiment a further blending step may be carried out prior to the collected maskant agglomerations being strained.

The present invention method may include more blending steps and more straining steps. The order and number of the additional blending and straining steps can be altered to satisfy the application at hand, and is not limited to the examples provided herein.

## Claims

1. A method for recycling maskant (12), comprising the steps of:
collecting used maskant agglomerations;
straining the collected used maskant agglomerations within a first straining device to remove materials of a size small enough to pass through the first straining device;
blending the strained maskant agglomerations, wherein the blending is operable to change the strained maskant agglomerations from a first volumetric size to a second volumetric size, which second volumetric size is less than the first volumetric size.

2. The method for recycling maskant (12) of claim 1, wherein the first straining device is a sieve.

3. The method for recycling maskant (12) of claim 1, wherein the first straining device has a plurality of apertures of a first cross-sectional area, the method further comprising the step of:
straining the blended maskant agglomerations within a second straining device having a plurality of apertures of a second cross-sectional area to remove materials of a size small enough to pass through the second straining device, wherein the second cross-sectional area is less than the first cross-sectional area.

4. The method for recycling maskant (12) of claim 3, wherein the first and second straining devices are sieves.

5. The method for recycling maskant (12) of claim 3, further comprising the step of blending the collected maskant agglomerations prior to the collected maskant agglomerations being strained, wherein the blending is operable to reduce the volumetric size of the collected maskant agglomerations.

6. The method for recycling maskant (12) of claim 1 or 2, further comprising the step of:
straining the blended maskant agglomerations to remove materials of a size small enough to pass through the second straining device.

7. The method for recycling maskant (12) of claim 6, further comprising the step of blending the collected maskant agglomerations prior to straining the collected maskant agglomerations.

## Patentansprüche

1. Verfahren zum Recyceln von Maskierungsmittel (12), folgende Schritte aufweisend:
Sammeln von gebrauchten Maskierungsmittel-Agglomeraten;
Sieben der gesammelten gebrauchten Maskierungsmittel-Agglomerate in einer ersten Siebvorrichtung, um Materialien zu entfernen, deren Größe klein genug ist, um durch die erste Siebvorrichtung hindurch zu gehen;
Vermischen der gesiebten Maskierungsmittel-Agglomerate, wobei das Vermischen dahingehend wirksam ist, die gesiebten Maskierungsmittel-Agglomerate von einer ersten volumetrischen Größe zu einer zweiten volumetrischen Größe zu verändern, wobei die zweite volumetrische Größe geringer als die erste volumetrische Größe ist.

2. Verfahren zum Recyceln von Maskierungsmittel (12) nach Anspruch 1, wobei die erste Siebvorrichtung ein Sieb ist.

3. Verfahren zum Recyceln von Maskierungsmittel (12) nach Anspruch 1, wobei die erste Siebvorrichtung eine Mehrzahl von Öffnungen einer ersten Querschnittsfläche hat, wobei das Verfahren außerdem folgenden Schritt aufweist:
Sieben der vermischten Maskierungsmittel-Agglomerate in einer zweiten Siebvorrichtung mit einer Mehrzahl von Öffnungen einer zweiten Querschnittsfläche, um Materialien einer Größe, die klein genug ist, um durch die zweite Siebvorrichtung hindurch zu gehen, zu entfernen, wobei die zweite Querschnittsfläche geringer als die erste Querschnittsfläche ist.

4. Verfahren zum Recyceln von Maskierungsmittel (12) nach Anspruch 3, wobei die erste und die zweite Siebvorrichtung Siebe sind.

5. Verfahren zum Recyceln von Maskierungsmittel (12) nach Anspruch 3, außerdem aufweisend den Schritt des Vermischens der gesammelten Maskierungsmittel-Agglomerate bevor die gesammelten Maskierungsmittel-Agglomerate gesiebt werden, wobei das Vermischen dahingehend wirksam ist, die volumetrische Größe der gesammelten Maskierungsmittel-Agglomerate zu verringern.

6. Verfahren zum Recyceln von Maskierungsmittel (12) nach Anspruch 1 oder 2, außerdem folgenden Schritt aufweisend:
Sieben der vermischten Maskierungsmittel-Agglomerate, um Materialien einer Größe, die klein genug ist, um durch die zweite Siebvorrichtung hindurch zu gehen, zu entfernen.

7. Verfahren zum Recyceln von Maskierungsmittel (12) nach Anspruch 6, außerdem aufweisend den Schritt des Vermischens der gesammelten Maskierungsmittel-Agglomerate vor dem Sieben der gesammelten Maskierungsmittel-Agglomerate.

## Revendications

1. Procédé de recyclage d'agent (12) de masquage; comportant les étapes consistant à :
collecter des agglomérats d'agent de masquage usagé ;
filtrer les agglomérats d'agent de masquage usagé collectés à l'intérieur d'un premier dispositif de filtration afin d'éliminer les matières de taille assez petite pour traverser le premier dispositif de filtration ;
brasser les agglomérats d'agent de masquage filtrés, le brassage agissant pour faire passer les agglomérats d'agent de masquage filtrés d'une première taille volumétrique à une deuxième taille volumétrique, ladite deuxième taille volumétrique étant inférieure à la première taille volumétrique.

2. Procédé de recyclage d'agent (12) de masquage selon la revendication 1, le premier dispositif de filtration étant un tamis.

3. Procédé de recyclage d'agent (12) de masquage selon la revendication 1, le premier dispositif de filtration étant doté d'une pluralité d'orifices présentant une première aire en section droite, le procédé comportant en outre l'étape consistant à :
filtrer les agglomérats d'agent de masquage brassés à l'intérieur d'un deuxième dispositif de filtration doté d'une pluralité d'orifices présentant une deuxième aire en section droite afin d'éliminer les matières de taille assez petite pour traverser le deuxième dispositif de filtration, la deuxième aire en section droite étant inférieure à la première aire en section droite.

4. Procédé de recyclage d'agent (12) de masquage selon la revendication 3, les premier et deuxième dispositifs de filtration étant des tamis.

5. Procédé de recyclage d'agent (12) de masquage selon la revendication 3, comportant en outre l'étape consistant à brasser les agglomérats d'agent de masquage collectés avant que les agglomérats d'agent de masquage collectés ne soient filtrés, le brassage agissant pour réduire la taille volumétrique des agglomérats d'agent de masquage collectés.

6. Procédé de recyclage d'agent (12) de masquage selon la revendication 1 ou 2, comportant en outre l'étape consistant à :
filtrer les agglomérats d'agent de masquage brassés pour éliminer les matières de taille assez petite pour traverser le deuxième dispositif de filtration.

7. Procédé de recyclage d'agent (12) de masquage selon la revendication 6, comportant en outre l'étape consistant à brasser les agglomérats d'agent de masquage collectés avant de filtrer les agglomérats d'agent de masquage collectés.
